# EUROPÄISCHE PATENTSCHRIFT

(11) **EP 0 773 677 B1**
(45) Veröffentlichungstag und Bekanntmachung des Hinweises auf die Patenterteilung: **13.03.2002**
(21) Anmeldenummer: 96107247.7
(22) Anmeldetag: 08.05.1996
(51) Int. Cl.: H04N 5/64, H04N 5/60

(54) **Verfahren zur lokalen Verknüpfung von optischen und akustischen Signalen**
Method for locally combining optical and acoustic signals
Méthode de combinaison locale de signaux optiques et acoustiques

(30) Priorität: 11.11.1995 DE 19542147
(43) Veröffentlichungstag der Anmeldung: 14.05.1997
(73) Patentinhaber: Deutsche Telekom AG, 53113 Bonn (DE)
(72) Erfinder: Stöhr, Herwig, Dr.-Ing., 10713 Berlin (DE)

(56) Entgegenhaltungen:
- EP-A- 0 323 110
- EP-A- 0 361 249
- DE-A- 3 832 616
- DE-A- 4 420 212
- DE-C- 846 558
- PATENT ABSTRACTS OF JAPAN vol. 017, no. 003 (E-1301), 6. Januar 1993 (1993-01-06) & JP 04 237288 A (NIPPON TELEGR & TELEPH CORP), 25. August 1992 (1992-08-25)

## Beschreibung

Die Erfindung betrifft eine Anordnung aus mehreren elektroakustischen Wandlern gemäß dem Oberbegriff des Anspruchs 1.

Die Sprach- und Tonwiedergabe bei audio-visuellen Geräten, wie z.B. bei Fernsehgeräten und Monitoren, geschieht z.Z. über herkömmliche dynamische Lautsprecher, die außerhalb der Bildschirmebene, meistens seitlich oder unterhalb des Bildschirmgerätes angeordnet sind. Bei derart angeordneten Lautsprechern findet zwischen den auf dem Bildschirm dargestellten optischen Informationen und den von den Lautsprechern abgestrahlten Schallsignalen keine oder nur eine geringe lokale Kopplung statt. Zwar wurden in der Vergangenheit Mehrkanal-Tonwiedergabetechniken, wie z.B. das "Dolby-Surround-Verfahren", entwickelt, die den Zuschauer aus mehreren Richtungen in der Horizontalebene beschallen können. Doch fehlt auch bei dieser Technik eine unmittelbare lokale Zuordnung von Audiosignalen zu den dazugehörigen Bildsignalen. Mit anderen Worten kann ein Zuschauer die zusammengehörenden Bild- und Tonsignale nicht an der gleichen Stelle des Bildschirms wahrnehmen.
Statt die Lautsprecher außerhalb der Bildschirmebene anzuordenen, offenbart die DE-OS 3832616 einen elektroakustischen Wandler mit einer piezopolymeren, transparenten Folie, die auf dem Bildschirm eines Fernsehempfängers selbst aufgebracht ist. Auf diese Weise wird zwar eine Übereinstimmung in der räumlichen Lage des Bildschirms und des Wandlers erreicht. Allerdings ist die bekannte Anordnung nicht in der Lage, eine lokale Verknüpfung zwischen mehreren optischen Ereignissen auf dem Bildschirm und den dazugehörigen Tonsignalen zu erzeugen, wie dies z.B. bei Videokonferenzen mit mehreren Konferenzteilnehmern wünschenswert ist.

Aus der JP-A-04 237 288 (Patent Abstracts of Japan vol. 017, no. 003 (E-1301), 6. Januar 1993 ist ein Videokonferenzsystem bekannt, welches dazu dient, jeden Sprecher einfacher identifizieren zu können. Zu diesem Zweck ist jeweils ein Lautsprecher an der rechten bzw. linken Seite eines Monitors angeordnet. In Abhängigkeit vom Schallpegel jedes Lautsprechers kann eine ortsrichtige Verknüpfung zwischen einem Bildereignis und der dazugehörenden virtuellen Schallquelle hergestellt werden.

Aus der DE-A-4 420 212 ist ein Übertragungssystem für gleichzeitige Mehrfachübertragung von mehreren Bild- und Tonsignalen bekannt. Um eine ortsrichtige Zuordnung zwischen Bild- und Tonsignalen zu erzeugen, sind außerhalb des Bildschirmbereichs Lautsprecher angeordnet, denen über eine Matrixschaltung bestimmte einkanalige Tonsignale in fester Zuordnung zugeführt werden.

Die EP-A-0 361 249 offenbart einen Lautsprecher, der durch eine piezopolymere, transparente Folie gebildet ist, die auf den Bildschirm eines Fernsehempfängers aufgebracht werden kann. Ferner offenbart dieses Dokument eine Leinwand mit einer sich über die gesamte Fläche erstreckenden piezopolymeren Folie. Hierbei kann die gesamte Fläche der Leinwand in mehrere getrennte piezopolymere Folien aufgeteilt werden, die je einen elektrostatischen Lautsprecher für unterschiedliche Kanäle einer Mehrkanal-Tonwiedergabe darstellen.

Aus der EP-A-0 323 110 ist ein Bildschirmgerät bekannt, bei dem Lautsprecher im Bildschirmrahmen aufgenommen sind.

Zusätzlich sind Lautsprecher vorgesehen, die den Bildschirm selbst als Diaphragma verwenden.

Die DE-C-0 846 558 offenbart einen Lautsprecher für einen Fernsehempfänger, bei dem die schallabstrahlende Membran durchsichtig und vor dem Bildschirm angeordnet ist.
Weiterhgehende Informationen sind diesem Dokument jedoch nicht zu entnehmen.

Der Erfindung liegt daher die Aufgabe zugrunde, eine Anordnung aus mehreren elektroakustischen Wandlern zur Verfügung zu stellen, die eine verbesserte lokale Verknüpfung von optischen und akustischen Signalen bei einem audiovisuellen Gerät mit einer Bild- und Tonwiedergabeeinrichtung ermöglicht.

Die Erfindung löst diese Aufgabe durch die Merkmale des Anspruchs 1.

Weitere vorteilhafte Ausgestaltungen sind in den abbängigen Ansprüchen definiert.

Die lokale Verknüpfung von Bild- und Tonsignalen bei einem audio-visuellen Gerät erreicht die Erfindung insbesondere dadurch, daß mehrere elektroakustische Wandler in unmittelbarer Nähe der Bildwiedergabeeinrichtung derart angeordnet und unabhängig voneinander elektrisch angesteuert werden, daß sich die an unterschiedlichen Bildbereichen der Bildwiedergabeeinrichtung stattfindenden optischen Ereignisse mit den zu ihnen gehörenden Schallsignalen, die von den entsprechenden elektroakustischen Wandlern abgestrahlt werden, ortsrichtig überlagern können. Auf diese Weise kann eine Wahrnehmungskoinzidenz von Bild- und Tonsignalen für alle Bildorte erreicht werden, da die elektroakustischen Wandler die Schallsignale jeweils von der Stelle des Bildschirms abstrahlen, an der auch die zugehörige visuelle Information entsteht. Bei den unabhängig voneinander elektrisch ansteuerbaren Wandler handelt es sich um transparente, elektrostatische Schallwandler (20), die in Form einer Matrix (30) vor der Bildwiedergabeeinrichtung angeordnet sind. Jeder elektrostatische Schallwandler weist eine elektrisch leitfähige, transparente Membran (50), insbesondere eine Kunststoffolie, und eine in einem vorbestimmten Abstand zur Membran angeordnete transparente Gegenelektrode (40) auf, wobei die Bildschirmoberfläche der Bildwiedergabeeinrichtung die Gegenelektrode für jeden elektrostatischen Schallwandler bildet.

Um den Wirkungsgrad des elektrostatischen Wandlers zu erhöhen und seinen Frequenzgang linearisieren zu können, umfasst die Gegenelektrode ein transparentes Metallgitter.

Alternativ dazu kann die Oberfläche des Bildschirms derart strukturiert sein, daß für jeden Schallwandler in Verbindung mit der daraufliegenden transparenten Membran mehrere kleine Schallstrahlerelemente entstehen. Vorzugsweise besteht dann die Gegenelektrode aus elektrisch leitfähigem Glas.

Ein wichtiges Anwendungsgebiet, auf dem die Erfindung große Bedeutung erlangen kann, ist der Videokonferenzsektor. Es werden seit geraumer Zeit Anstrengungen unternommen, immer größere Displays zu entwickeln, mit denen die Konferenzteilnehmer in natürlicher Größe dargestellt werden können. Hier zeigt sich der große Vorteil der Erfindung darin, daß ein betrachtender Konferenzteilnehmer das Sprachsignal immer an dem Bildschirmort seines Displays wahrnimmt, an dem der gerade sprechende Konfernzteilnehmer dargestellt wird. Dank der erfindungsgemäßen Wandleranordnung kann die Sprachverständlichkeit bei einer Videokonferenz verbessert und die Kommunikationsqualität ganz allgemein gesteigert werden.

Die Erfindung wird nachfolgend anhand der Ausführungsbeispiele in Verbindung mit den beiliegenden Zeichnungen näher erläutert. Es zeigen:
- Fig. 1: eine mögliche Anordnung transparenter Wandler vor einem Bildschirm eines Fernsehempfängers,
- Fig. 2: die Seitenansicht des Fernsehempfängers nach Fig. 1,
- Fig. 3: den prinzipiellen Aufbau eines elektrostatischen Wandlers, der in der erfindungsgemäßen Anordnung einsetzbar ist,
- Fig. 4: eine vereinfachte prinzipielle Darstellung eines elektrostatischen Wandlers, der aus vielen kleinen Schallstrahlern besteht, und
- Fig. 5: den Querschnitt eines in einem Display integrierten elektrostatischen Wandlers.

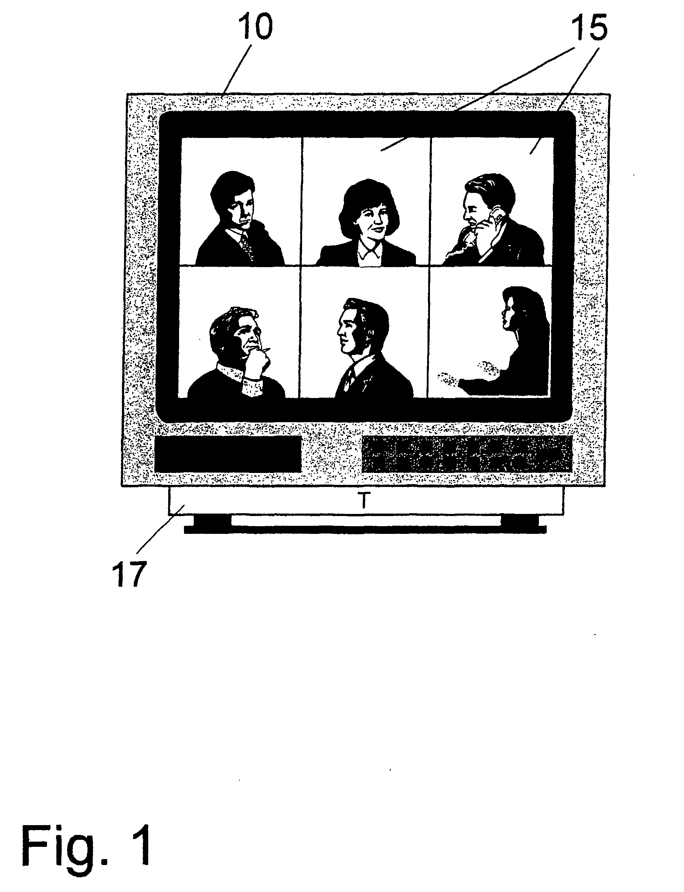

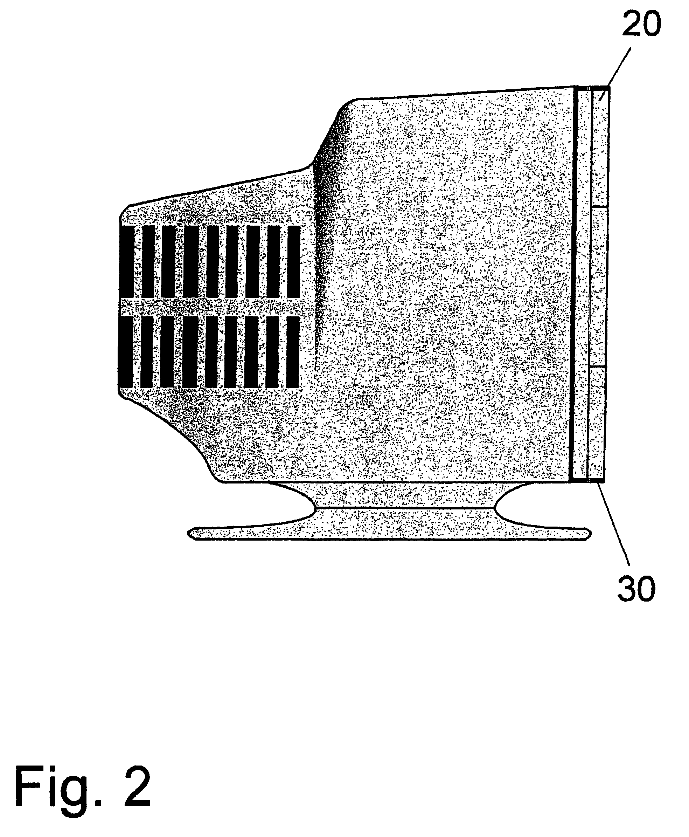

In Fig. 1 ist ein audio-visuelles Gerät 10, wie z.B. ein Fernsehempfänger, dargestellt, der in sechs Bildbereiche oder Fenster 15 unterteilt ist. Es sei angenommen, daß gerade eine sogenannte Multipoint-Videokonferenz zwischen sieben Konferenzteilnehmern stattfindet und bei jedem Konferenzteilnehmer ein Fernsehempfänger nach Fig. 1 aufgestellt ist. Es sei darauf hingewiesen, daß die Erfindung auch bei herkömmlichen Videokonferenzen anwendbar ist, bei denen sich zwei Peronengruppen an zwei Orten aufhalten. Jeder Konferenzteilnehmer sieht auf dem Bildschirm seines Fernsehempfänger 10 die sechs anderen Konferenzteilnehmer in jeweils einem der Fenster 15. Damit der betrachtende Konferenzteilnehmer nicht nur sehen kann, wer mit wem spricht, sondern auch den sprechenden Teilnehmer akustisch richtig lokalisieren kann, kann eine Matrix 30 aus sechs transparenten elektrostatischen Elektroakustik-Wandlern 20 vor dem Bildschirm des Fernsehempfängers 10 angeordnet sein, wie dies auch in Fig. 2 zu sehen ist. Jedem Fenster 15 ist somit unmittelbar ein eigener Wandler 20 zugeordnet. Zweckmäßigerweise können die sechs Wandlerelemente 20 unabhängig voneinander elektrisch angesteuert werden, so daß die Sprachsignale des sprechenden Konferenzteilnehmers nur von dem Wandler 20 abgestrahlt werden, der sich unmittelbar vor dem Fenster 15 befindet, in dem der sprechende Teilnehmer gerade dargestellt wird. Sollen die Bildsignale der sechs getrennten Bildbereiche 15 mit den dazugehörigen akustischen Signalen ortsrichtig gekoppelt werden, muß der Fernsehempfänger 10 bzw. die Wandler-Matrix 30 in der Lage sein, die sechs übertragenen Tonkanäle jeweils an den richtigen Wandler 20 anzulegen. Unterhalb des Bildschirms des Ferneshempfängers 10 kann ein Tieftonlautsprecher 17 vorgesehen sein, der die tieffrequenten Anteile des wiederzugebenden Schallsignals aller (z.B. 6) Kanäle abstrahlt. Dies erscheint sinnvoll, da die Richtungslokalisierung des menschlichen Gehörs bei tiefen Frequenzen nur schwach ausgeprägt ist, und die Wandler vor dem Bildschirm (nach dem elektrostatischen oder piezoelektrischen Prinzip) bei tiefen Frequenzen nur geringe Schalleistungen abstrahlen können. Man überträgt deshalb lediglich die höheren Frequenzen über den transparenten Wandler 20.

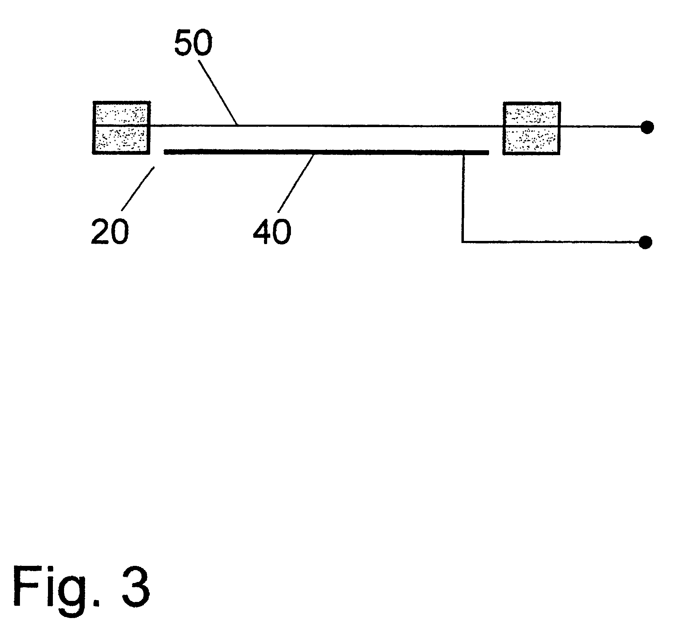

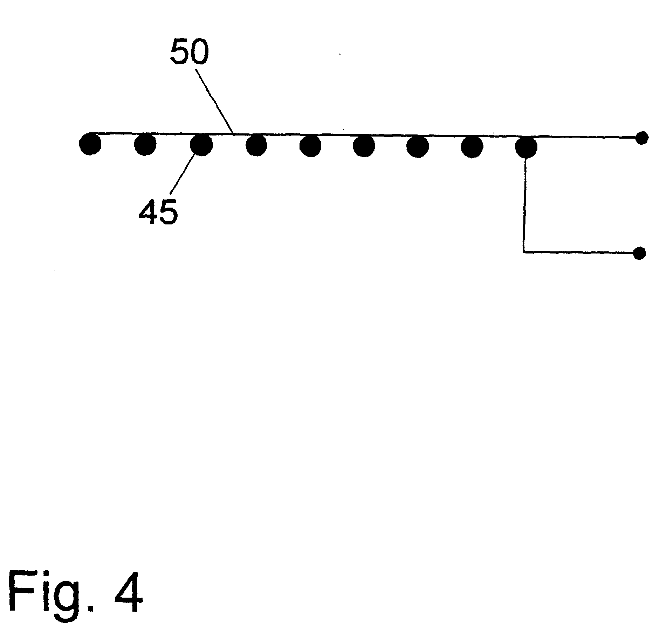

In Fig. 3 ist zur Illustration ein elektrostatischer Wandler 20 dargestellt, wie er in der Wandlermatrix 30 verwendet werden kann. Der elektrostatische Wandler 20 weist eine transparente Gegenelektrode 40 und eine dünne, transparente und elektrisch leitfähige Membran 50 auf. Bei der Membran 50 kann es sich beispielsweise um eine Kunsstoffolie handeln, die einseitig mit Metall bedampft oder nach einem anderen Verfahren elektrisch leitfähig gemacht werden kann. An die Membran 50 und die Gegenelektrode 40 wird die in Schallenergie umzuwandelnde Signalspannung und eine Polarisationsspannung angelegt. Die Polarisationsspannung ist eine Gleichspannung und dient der Linearisierung der Übertragungskennlinie des Wandlers 20, wodurch Signalverzerrungen vermieden werden. Als Gegenelektrode 40 können ein elektrisch leitfähiges Glas, metallbedampfte Kunststoffolien oder hochtransparente Metallgitter (Netze) verwendet werden. Mit Hilfe eines solchen in Fig. 4 dargestellten transparenten Metallgitters kann der Wirkungsgrad des elektrostatischen Wandlers 20 erhöht und sein Frequenzgang linearisiert werden. Diese Wirkung ergibt sich daraus, daß zwischen der Membran 50 und der gitterförmigen Gegenelektrode 40 viele kleine Hohlräume und somit viele kleine Schallwandler entstehen. Die so entstandenen kleinen Schallwandler, die Abmessungen von etwa 0,5 bis 5 mm aufweisen, sind in der Lage, stets in der Grundmode zu schwingen. Einen ähnlichen Effekt erzielt man, wenn eine transparente, wellig strukturierte und elektrisch leitfähige Oberfläche, die als Gegenelektrode für den Wandler 20 wirkt, auf die Bildschirmoberfläche des Fernsehempfängers 10 aufgebracht ist. Auf die aufgeraute, beispielsweise mit Noppen versehene Oberfläche wird anschließend die Membran 50 aufgebracht. Auch hier entstehen wiederum viele kleine Wandler, die zur Verbesserung des Wirkungsgrades des Wandlers 20 beitragen. Wie bereits erwähnt, kann der in Fig. 3 und 4 dargestellte transparente elektrostatische Wandler 20 eines der sechs Wandlerelemente der Matrix 30 sein.
Entgeger der oben zur Illustration geschilderten separaten Anordnung von transparenten Wandlern vor dem Bildschirme zur Bild-Ton-Verknüpfung ist es gemäß des Erbindung vorgesehen, transparente Wandler gleich in den Bildschirm zu integrieren.
Hierzu wird die Bildschirmoberfläche eines Fernsehempfängers selbst als Gegenelektrode benutzen, indem sie z.B. mittels Metallbedampfung elektrisch leitfähig gemacht wird. Eine elektrisch leitfähige Kunststoffolie muß dann lediglich noch als Membran in einem geeigneten Abstand vor der Bildröhre platziert werden. Die zum Vorspannen eines mit der Bildschirmoberfläche integrierten Wandlers benötigte Gleichspannung läßt sich beispielsweise aus der Hochspannungsquelle gewinnen, die üblicherweise in Monitoren mit einer herkömmlichen Braun'schen Röhre zur Verfügung steht.

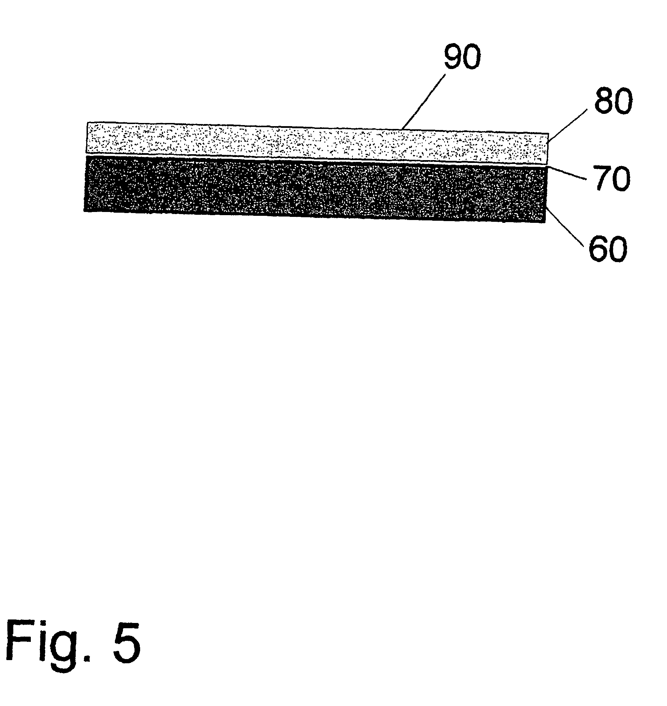

Auch bei der Herstellung von modernen LC-, TFT- oder anderen Displays kann ein elektroakustischer Wandler gleich mitintegriert werden, um eine effiziente und direkte lokale Verknüpfung von optischen und akustischen Signalen zu erreichen. Ein in einem Display integrierter elektrostatischer Wandler ist in Fig. 5 dargestellt. Der Wandler weist eine äußere Displayschicht 60 auf, auf der eine leitfähige transparente Schicht als Gegenelektrode 70 aufgebracht ist. Um einen geeigneten Abstand zwischen der Gegenelektrode 70 und einer Membran 90 sicherzustellen, wird dazwischen eine isolierende, transparente Zwischenschicht 80 aufgebracht, die einen vorbestimmten Elastizitätsgrad besitzen muß. Die Zwischenschicht 80 ist dann in der Lage, kleine Dickenschwingungen in der Größenordnung von etwa 0,1 mm auszuführen, so daß sich die darüber befindliche, elektrisch leitfähige und transparente Membran 90 bewegen kann. Neben transparenten elektrostatischen Wandlern 20 können auch transparente piezoelektrische Wandler in der vor dem Bildschirm des Fernsehempfängers angeordneten Matrix 30 benutzt werden.

Dank der Erfindung ist es möglich, eine Wahrnehmungskoinzidenz von Bild- und Tonsignalen für alle Bildschirmorte zu erzielen. Dazu werden entsprechend viele elektroakustische Wandler verwendet, die ihr Schallsignal jeweils von der Stelle des Bildschirms abstrahlen, die auch tatsächlich die zugehörige visuelle Information liefert. Die beste lokale Kopplung von optischer und akustischer Information ergibt sich dann, wenn ein transparentes Wandlersystem unmittelbar vor der Bildschirmfläche angeordnet ist. Das Bild-Ton-System ist außerdem mehrkanalfähig, d. h. jeder Wandler strahlt nur die Tonsignale ab, die zu dem Bildschirmfenster gehören, das dem Wandler unmittelbar zugeordnet ist. Bei quasi statischen Bildinformationen, wie dies z.B. bei Videokonferenzen der Fall ist, ist eine solche Tonwiedergabe-Technik besonders nützlich.

## Patentansprüche

1. Anordnung aus mehreren elektroakustischen Wandlern, die zur lokalen Verknüpfung von optischen und akustischen Signalen bei einem audio-visuellen Gerät mit einer Bildwiedergabeeinrichtung einsetzbar ist,
wobei die elektroakustischen Wandler (20) in unmittelbarer Nähe der Bildwiedergabeeinrichtung derart angeordnet und unabhängig voneinander elektrisch ansteuerbar sind, daß sich die an unterschiedlichen Bildbereichen (15) der Bildwiedergabeeinrichtung stattfindenden optischen Ereignisse mit den zu ihnen gehörenden Schallsignalen, die von den entsprechenden Wandlern (20) abgestrahlt werden, ortsrichtig überlagern können,
**dadurch gekennzeichnet, dass**
die unabhängig voneinander elektrisch ansteuerbaren Wandler transparente, elektrostatische Schallwandler (20) sind, die in Form einer Matrix (30) vor der Bildwiedergabeeinrichtung angeordnet sind, dass jeder elektrostatische Schallwandler eine elektrisch leitfähige, transparente Membran (50), insbesondere eine Kunststoffolie, und eine in einem vorbestimmten Abstand zur Membran angeordnete transparente Gegenelektrode (40) aufweist, wobei die Bildschirmoberfläche der Bildwiedergabeeinrichtung die Gegenelektrode für jeden elektrostatischen Schallwandler bildet.

2. Anordnung aus mehreren elektrostatischen Schallwandlern nach Anspruch 1,
**dadurch gekennzeichnet, dass**
die Gegenelektrode (40) ein transparentes Metallgitter umfasst.

3. Anordnung aus mehreren elektrostatischen Schallwandlern nach Anspruch 1,
**dadurch gekennzeichnet, dass** die Oberfläche des Bildschirms derart strukturiert ist, daß. für jeden Schallwandler in Verbindung mit der daraufliegenden transparenten Membran (50) mehrere kleine Schallstrahlerelemente entstehen.

4. Anordnung aus mehreren elektrostatischen Schallwandlern nach Anspruch 3, dass
die Gegenelektrode ein elektrisch leitfähiges Glas ist.

## Claims

1. Arrangement comprising a number of electroacoustic transducers, which can be used for local linking of optical and acoustic signals in an audiovisual appliance having an image reproduction device, with the electroacoustic transducers (20) being arranged in the immediate vicinity of the image reproduction device, and being capable of being driven electrically independently of one another such that the optical events which take place in different image areas (15) of the image reproduction device have superimposed on them, in the correct position, the sound signals which are associated with them and are emitted from the corresponding transducers (20),
**characterized in that**
the transducers which can be driven electrically independently of one another are transparent, electrostatic sound transducers (20), which are arranged in the form of a matrix (30) in front of the image reproduction device, **in that** each electrostatic sound transducer has an electrically conductive, transparent membrane (50), in particular a plastic film, and a transparent opposing electrode (40), arranged at a predetermined distance from the membrane, with the screen surface of the image reproduction device forming the opposing electrode for each electrostatic sound transducer.

2. Arrangement comprising a number of electrostatic sound transducers according to Claim 1,
**characterized in that**
the opposing electrode (40) comprises a transparent metal grating.

3. Arrangement comprising a number of electrostatic sound transducers according to Claim 1,
**characterized in that** the surface of the screen is structured such that a number of small sound emitter elements are produced for each sound transducer in conjunction with the transparent membrane (50) located on it.

4. Arrangement comprising a number of electrostatic sound transducers according to Claim 3, in that
the opposing electrode is an electrically conductive glass.

## Revendications

1. Arrangement de plusieurs convertisseurs électroacoustiques qui peut être utilisé pour combiner localement des signaux visuels et sonores sur un appareil audiovisuel équipé d'un dispositif de restitution de l'image, les convertisseurs électroacoustiques (20) étant disposés à proximité immédiate du dispositif de restitution de l'image et pouvant être commandés électriquement indépendamment l'un de l'autre de manière à ce que les événements visuels qui ont lieu sur différentes zones d'image (15) du dispositif de restitution de l'image puissent se superposer à l'endroit correct avec les signaux sonores qui leur correspondent et qui sont émis par les convertisseurs correspondants (20), **caractérisé en ce que** les convertisseurs pouvant être commandés électriquement indépendamment les uns des autres sont des convertisseurs sonores électrostatiques (20) qui sont disposés devant le dispositif de restitution de l'image sous la forme d'une matrice (30), que chaque convertisseur sonore électrostatique présente une membrane transparente (50) conductrice d'électricité, plus particulièrement un fil en matière plastique, ainsi qu'une contre-électrode transparente (40) disposée à une distance donnée de la membrane, la surface de l'écran du dispositif de restitution de l'image formant la contre-électrode pour chaque convertisseur sonore électrostatique.

2. Arrangement de plusieurs convertisseurs électroacoustiques selon la revendication 1, **caractérisé en ce que** la contre-électrode (40) comprend une grille métallique.

3. Arrangement de plusieurs convertisseurs électroacoustiques selon la revendication 1, **caractérisé en ce que** la surface de l'écran est structurée de manière à ce que pour chaque convertisseur sonore, il existe plusieurs petits éléments de diffusion sonore en liaison avec la membrane transparente (50) qui y repose.

4. Arrangement de plusieurs convertisseurs électroacoustiques selon la revendication 3, **caractérisé en ce que** la contre-électrode est un verre conducteur d'électricité.
